(19) Europäisches Patentamt
European Patent Office
Office européen des brevets

(11) EP 4 667 531 A1

(12) EUROPEAN PATENT APPLICATION
published in accordance with Art. 153(4) EPC

(43) Date of publication:
**24.12.2025 Bulletin 2025/52**

(21) Application number: **24756695.3**

(22) Date of filing: **02.02.2024**

(51) International Patent Classification (IPC):
***C08L 69/00*** *(2006.01)* ***C08K 5/50*** *(2006.01)*

(52) Cooperative Patent Classification (CPC):
**C08K 5/50; C08L 69/00**

(86) International application number:
**PCT/JP2024/003425**

(87) International publication number:
**WO 2024/171845 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 JP 2023020733**

(71) Applicant: **Teijin Limited**
**Osaka-shi, Osaka 530-0005 (JP)**

(72) Inventors:
- **TANABE Seiichi**
  **Osaka-shi Osaka 530-0005 (JP)**
- **SANO Yuusuke**
  **Osaka-shi Osaka 530-0005 (JP)**
- **NORIMATSU Manabu**
  **Osaka-shi Osaka 530-0005 (JP)**

(74) Representative: **Kraus & Lederer PartGmbB**
**Thomas-Wimmer-Ring 15**
**80539 München (DE)**

# (54) POLYCARBONATE RESIN COMPOSITION AND MOLDED ARTICLE THEREOF

(57) Provided is a polycarbonate resin composition containing, relative to (A) a polycarbonate resin (component A), (B) a triarylphosphine (component B) represented by the following formula [1], and this resin composition is characterized by undergoing less discoloration when exposed to a high-temperature environment for a long period of time and having excellent thermal stability.

[Chemical formula 1]

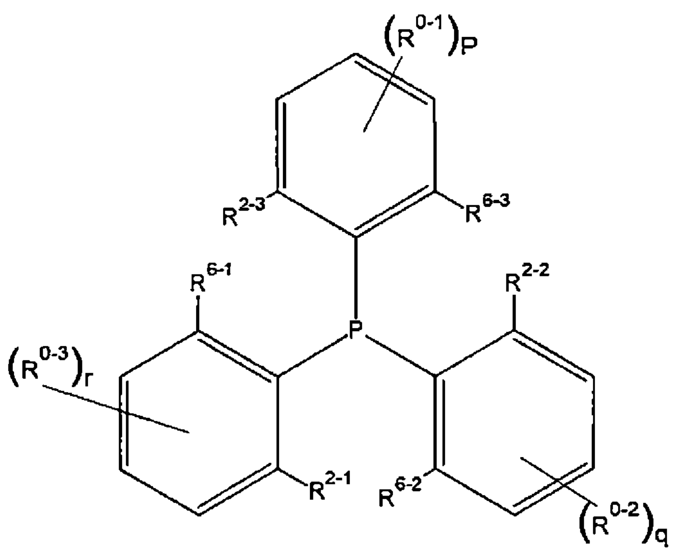

〔1〕



EP 4 667 531 A1

[In the formula, $R^{2-1}$, $R^{2-2}$, $R^{2-3}$, $R^{6-1}$, $R^{6-2}$, $R^{6-3}$, $R^{0-1}$, $R^{0-2}$, and $R^{0-3}$ are each a hydrogen atom, a hydrocarbon group, an alkoxy group, or a halogen and may be the same or different from each other, with the proviso that at least one of $R^{2-1}$, $R^{2-2}$, $R^{2-3}$, $R^{6-1}$, $R^{6-2}$, and $R^{6-3}$ is a hydrocarbon group, an alkoxy group, or a halogen, and p, q, and r are each an integer of 0 to 3.]

## Description

### Technical Field

The present invention relates to a polycarbonate resin composition and a molded article thereof. More specifically, it relates to a polycarbonate resin composition having added thereto a triarylphosphine with a specific structure and thus having improved thermal stability, and also to a molded article thereof.

### Background Art

Polycarbonate resins have excellent heat resistance, mechanical characteristics, impact resistance, dimensional stability, etc., and are used for wide applications in the fields of office automation equipment, automobiles, electric and electronic parts, and the like. In recent years, closer attention has been given to the issue of the consumption of limited resources, environmental issues caused by the emission of carbon dioxide, and the like, and a longer product life is desired also for polycarbonate resins. However, polycarbonate resins are problematic in that when exposed to a high-temperature environment for a long period of time, they turn yellow, leading to a deterioration in hue.

For example, PTL 1 discloses that a polycarbonate resin composition using a phosphine compound together with a specific hindered phenol compound suppresses polycarbonate resin discoloration in a high-temperature environment. However, the effect of a phosphine compound alone has been shown to be insufficient, and also a phosphine compound having the specific structure of the invention is not exemplified either. PTL 2 discloses that a polycarbonate resin composition using an arylphosphine compound together with an alicyclic epoxy compound suppresses polycarbonate resin discoloration in a high-temperature environment. However, the effect of a phosphine compound alone has been shown to be insufficient, and also a phosphine compound having the specific structure of the invention is not exemplified either. PTL 3 discloses that a polycarbonate resin composition using a phosphine compound together with a metal boride suppresses polycarbonate resin discoloration in a high-temperature environment, but the effect of a phosphine compound alone has not been shown. In addition, a phosphine compound having the specific structure of the invention is not exemplified either.

### Citation List

#### Patent Literature

PTL 1: JP2011-80060A
PTL 2: JP2005-112963A
PTL 3: JP2005-112963A

### Summary of Invention

#### Technical Problem

In response to the discoloration problem of polycarbonate resin compositions upon exposure to a high-temperature environment for a long period of time as described above, an object of the invention is to provide a polycarbonate resin composition that undergoes less discoloration and has excellent thermal stability, and also a molded article obtained by molding the same.

#### Solution to Problem

As a result of extensive research, the present inventors have found that the above problems can be solved by incorporating a phosphine-based compound having a specific structure into a polycarbonate resin, and thus accomplished the invention.

That is, according to the invention, the following configurations (1) to (7) are provided.

(1) A polycarbonate resin composition containing, relative to (A) a polycarbonate resin (component A), (B) a triarylphosphine (component B) represented by the following formula [1].

[Chemical formula 1]

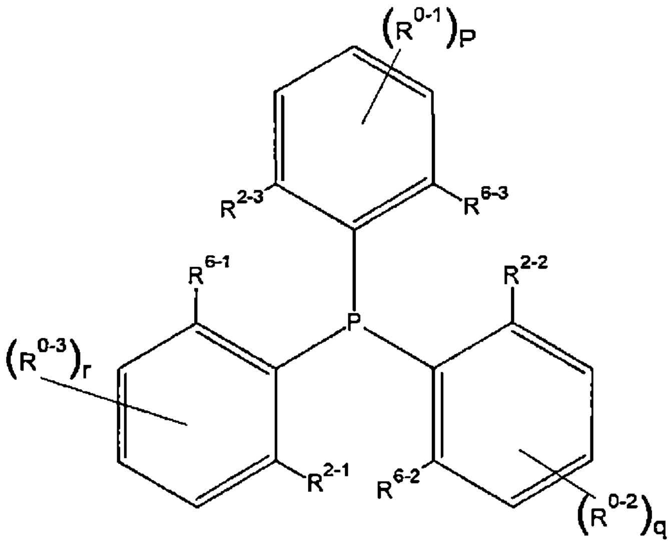

〔1〕

[In the formula, $R^{2-1}$, $R^{2-2}$, $R^{2-3}$, $R^{6-1}$, $R^{6-2}$, $R^{6-3}$, $R^{0-1}$, $R^{0-2}$, and $R^{0-3}$ are each a hydrogen atom, a hydrocarbon group, an alkoxy group, or a halogen and may be the same or different from each other, with the proviso that at least one of $R^{2-1}$, $R^{2-2}$, $R^{2-3}$, $R^{6-1}$, $R^{6-2}$, and $R^{6-3}$ is a hydrocarbon group, an alkoxy group, or a halogen, and p, q, and r are each an integer of 0 to 3.]

(2) The polycarbonate resin composition according to the above item (1), in which in formula [1], the hydrocarbon group is an alkyl group, an aralkyl group, an alkenyl group, or an aryl group.

(3) The polycarbonate resin composition according to the above item (1), in which in formula [1], at least one of $R^{2-1}$, $R^{2-2}$, $R^{2-3}$, $R^{6-1}$, $R^{6-2}$, and $R^{6-3}$ is an alkyl group or an alkoxy group.

(4) The polycarbonate resin composition according to the above item (1), in which in formula [1], at least one of $R^{2-1}$, $R^{2-2}$, $R^{2-3}$, $R^{6-1}$, $R^{6-2}$, and $R^{6-3}$ is an alkyl group having 1 to 4 carbon atoms.

(5) The polycarbonate resin composition according to the above item (1), in which the triarylphosphine as component B is tri(o-tolyl)phosphine, tri(2,5-xylyl) phosphine, or tri(2,4-xylyl)phosphine.

(6) The polycarbonate resin composition according to the above item (1), containing 0.001 to 0.1 parts by mass of the component B per 100 parts by mass of the component A.

(7) A molded article formed from the polycarbonate resin composition according to any one of the above items (1) to (6).

Advantageous Effects of Invention

The polycarbonate resin composition of the invention undergoes less discoloration when exposed to a high-temperature environment for a long period of time and has excellent thermal stability, and, therefore, molded articles molded from the polycarbonate resin composition can be favorably used for various industrial applications in the fields of lighting including LED lighting, office automation equipment, electrical and electronic equipment, automobiles, building materials, and the like. The industrial value thereof is extremely high.

Description of Embodiments

Hereinafter, the invention will be described in detail.

<Component A: Polycarbonate Resin>

The polycarbonate resin used as the component A of the invention is usually obtained by allowing a dihydroxy compound to react with a carbonate precursor through an interfacial polycondensation method or a melt transesterification method, or is alternatively obtained by polymerizing a carbonate prepolymer through a solid-phase transesterification method or by polymerizing a cyclic carbonate compound through a ring-opening polymerization method.

The dihydroxy component used here may be any of those usually used as dihydroxy components for polycarbonate resins, including bisphenols and aliphatic diols.

As bisphenols, for example, 4,4'-dihydroxybiphenyl, bis(4-hydroxyphenyl)methane, 1,1-bis(4-hydroxyphenyl) ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl) propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyl diphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyl diphenyl sulfoxide, 4,4'-dihydroxy-3,3'-dimethyl diphenyl sulfide, 2,2'-diphenyl-4,4'-sulfonyldiphenol, 4,4'-dihydroxy-3,3'-diphenyl diphenyl sulfoxide, 4,4'-dihydroxy-3,3'-diphenyl diphenyl sulfide, 1,3-bis{2-(4-hydroxyphenyl)propyl}benzene, 1,4-bis{2-(4-hydroxyphenyl)propyl} benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.0(2,6)]decane, 4,4'-(1,3-adamantanediyl)diphenol, 1,3-bis(4-hydroxyphenyl)-5,7-dimethyladamantane, and a bisphenol compound having a siloxane structure represented by the following formula [2] can be mentioned.

[Chemical formula 2]

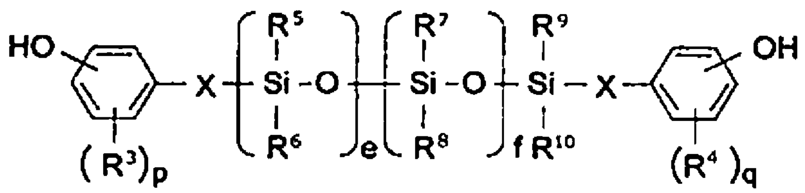

[2]

[In the formula, $R^3$ and $R^4$ are each independently a hydrogen atom, a halogen atom, an alkyl group having 1 to 10 carbon atoms, or an alkoxy group having 1 to 10 carbon atoms, $R^5$, $R^6$, $R^7$, $R^8$, $R^9$, and $R^{10}$ are each independently a hydrogen atom, an alkyl group having 1 to 12 carbon atoms, or a substituted or unsubstituted aryl group having 6 to 12 carbon atoms, p and q are each an integer of 1 to 4, e is a natural number, f is 0 or a natural number, and e + f is a natural number of less than 100. X is a divalent aliphatic group having 2 to 8 carbon atoms.]

As aliphatic diols, for example, 2,2-bis-(4-hydroxycyclohexyl)-propane, 1,14-tetradecanediol, octaethylene glycol, 1,16-hexadecanediol, 4,4'-bis(2-hydroxyethoxy) biphenyl, bis{ (2-hydroxyethoxy)phenyl}methane, 1,1-bis{ (2-hydroxyethoxy)phenyl}ethane, 1,1-bis{(2-hydroxyethoxy)phenyl}-1-phenylethane, 2,2-bis{ (2-hydroxyethoxy)phenyl} propane, 2,2-bis{ (2-hydroxyethoxy)-3-methylphenyl}propane, 1,1-bis{ (2-hydroxyethoxy)phenyl}-3,3,5-trimethylcyclohexane, 2,2-bis{4-(2-hydroxyethoxy)-3,3'-biphenyl}propane, 2,2-bis{ (2-hydroxyethoxy)-3-isopropylphenyl}propane, 2,2-bis{3-t-butyl-4-(2-hydroxyethoxy)phenyl}propane, 2,2-bis{(2-hydroxyethoxy)phenyl}butane, 2,2-bis{(2-hydroxyethoxy)phenyl}-4-methylpentane, 2,2-bis{(2-hydroxyethoxy)phenyl}octane, 1,1-bis{(2-hydroxyethoxy)phenyl}decane, 2,2-bis{3-bromo-4-(2-hydroxyethoxy)phenyl}propane, 2,2-bis{3,5-dimethyl-4-(2-hydroxyethoxy)phenyl}propane, 2,2-bis{3-cyclohexyl-4-(2-hydroxyethoxy)phenyl}propane, 1,1-bis{3-cyclohexyl-4-(2-hydroxyethoxy)phenyl}cyclohexane, bis{(2-hydroxyethoxy)phenyl}diphenylmethane, 9,9-bis{(2-hydroxyethoxy)phenyl}fluorene, 9,9-bis{4-(2-hydroxyethoxy)-3-methylphenyl}fluorene, 1,1-bis{(2-hydroxyethoxy)phenyl}cyclohexane, 1,1-bis{(2-hydroxyethoxy)phenyl} cyclopentane, 4,4'-bis(2-hydroxyethoxy)diphenyl ether, 4,4'-bis(2-hydroxyethoxy)-3,3'-dimethyl diphenyl ether, 1,3-bis [2-{(2-hydroxyethoxy)phenyl}propyl]benzene, 1,4-bis[2-{(2-hydroxyethoxy)phenyl}propyl]benzene, 1,4-bis{(2-hydroxyethoxy)phenyl}cyclohexane, 1,3-bis{(2-hydroxyethoxy)phenyl}cyclohexane, 4,8-bis{(2-hydroxyethoxy)phenyl}tricyclo[5.2.1.02,6]decane, 1,3-bis{(2-hydroxyethoxy)phenyl}-5,7-dimethyladamantane, 3,9-bis(2-hydroxy-1,1-dimethylethyl)-2,4,8,10-tetraoxaspiro(5,5)undecane, 1,4:3,6-dianhydro-D-sorbitol (isosorbide), and 1,4:3,6-dianhydro-D-mannitol (isomannide), 1,4:3,6-dianhydro-L-iditol (isoidide) can be mentioned.

Among them, aromatic bisphenols are preferable. In particular, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene, 1,4-bis{2-(4-hydroxyphenyl)propyl}benzene, and a bisphenol compound represented by the above formula [6] are preferable, and 2,2-bis(4-hydroxyphenyl) propane, 1,1-bis(4-hydroxyphenyl)cyclohexane, 4,4'-sulfonyldiphenol, 9,9-bis(4-hydroxy-3-methylphenyl)fluorene, and a bisphenol compound represented by the above formula [2] are especially preferable. Among them, 2,2-bis(4-hydroxyphenyl)propane, which is excellent in strength and has good durability, is most favorable. In addition, they may be used alone, and it is also possible to use a combination of two or more kinds.

The polycarbonate resin used as the component A of the invention may also be a branched polycarbonate resin

obtained by using a branching agent together with the above dihydroxy compound. As trifunctional or higher polyfunctional aromatic compounds used for such branched polycarbonate resins, phloroglucine, phloroglucide, trisphenols such as 4,6-dimethyl-2,4,6-tris(4-hydroxydiphenyl)heptene-2,2,4,6-trimethyl-2,4,6-tris(4-hydroxyphenyl) heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, and 4-{4-[1,1-bis(4-hydroxyphenyl)ethyl]benzene}-$\alpha$,$\alpha$-dimethylbenzylphenol, tetra (4-hydroxyphenyl) methane, bis(2,4-dihydroxyphenyl) ketone, and 1,4-bis(4,4-dihydroxytriphenylmethyl)benzene, as well as trimellitic acid, pyromellitic acid, benzophenonetetracarboxylic acid, acid chlorides thereof, etc., can be mentioned. In particular, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable.

These polycarbonate resins are produced by a reaction means known per se for producing a usual aromatic polycarbonate resin, for example, a method in which an aromatic dihydroxy component is allowed to react with a carbonate precursor such as phosgene or a carbonic acid diester. A basic means for such a production method will be briefly described.

In a reaction using phosgene as a carbonate precursor, for example, the reaction is usually carried out in the presence of an acid binder and a solvent. As an acid binder, for example, an alkali metal hydroxide, such as sodium hydroxide or potassium hydroxide, or an amine compound, such as pyridine, is used. As a solvent, for example, a halogenated hydrocarbon such as methylene chloride or chlorobenzene is used. In addition, it is also possible to use a catalyst such as a tertiary amine or a quaternary ammonium salt, for example, in order to accelerate the reaction. In this case, the reaction temperature is usually 0 to 40°C, and the reaction time is several minutes to 5 hours. A transesterification reaction using a carbonic acid diester as a carbonate precursor is carried out by a method in which a carbonic acid diester is stirred with heating together with a predetermined proportion of an aromatic dihydroxy component in an inert gas atmosphere, and the produced alcohol or phenol is distilled. The reaction temperature depends on the boiling point of the produced alcohol or phenol, etc., but is usually within a range of 120 to 300°C. The reaction proceeds at reduced pressure from the initial stage, and the reaction is completed while distilling the produced alcohol or phenol. In addition, in order to accelerate the reaction, catalysts usually used in transesterification reactions can also be used. As carbonic acid diesters for use in the transesterification reaction, for example, diphenyl carbonate, dinaphthyl carbonate, bis(diphenyl) carbonate, dimethyl carbonate, diethyl carbonate, and dibutyl carbonate can be mentioned. Among them, diphenyl carbonate is particularly preferable.

In the invention, an end terminator is used in the polymerization reaction. The end terminator is used to control the molecular weight. In addition, the resulting polycarbonate resin is end-capped, and thus has better thermal stability than those that are not. As such end terminators, monofunctional phenols represented by the following formulas [3] to [5] can be shown.

[Chemical formula 3]

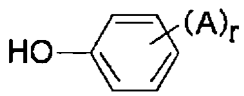

[3]

[In formula (3), A is a hydrogen atom, an alkyl group having 1 to 9 carbon atoms, an alkylphenyl group (the alkyl moiety has 1 to 9 carbon atoms), a phenyl group, or a phenylalkyl group (the alkyl moiety has 1 to 9 carbon atoms), and r is an integer of 1 to 5, preferably 1 to 3.]

[Chemical formula 4]

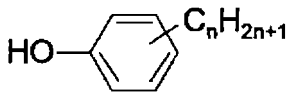

[4]

[Chemical formula 5]

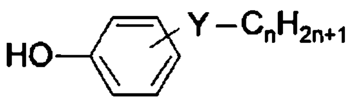

[5]

[In formulas [4] and [5], Y is -R-O-, -R-CO-O-, or - R-O-CO-, in which R represents a single bond or a divalent aliphatic

hydrocarbon group having 1 to 10 carbon atoms, preferably 1 to 5 carbon atoms, and n represents an integer of 10 to 50.]

As specific examples of monofunctional phenols represented by the above formula [3], for example, phenol, isopropylphenol, p-tert-butylphenol, p-cresol, p-cumylphenol, 2-phenylphenol, 4-phenylphenol, and isooctylphenol can be mentioned.

In addition, monofunctional phenols represented by the above formula [4] or [5] are phenols having a long-chain alkyl group or an aliphatic ester group as a substituent. When a polycarbonate resin is end-capped using them, they do not only function as end terminators or molecular weight modifiers, but also improve the melt flowability of the resin, facilitating molding processing, and also have a lowering effect on the water absorption of the resin. Thus, these phenols are preferably used.

As substituted phenols of the above formula [4], those in which n is 10 to 30, particularly 10 to 26, are preferable. As specific examples thereof, for example, decylphenol, dodecylphenol, tetradecylphenol, hexadecylphenol, octadecylphenol, eicosylphenol, docosylphenol, and triacontylphenol can be mentioned.

In addition, as substituted phenols of the above formula [5], compounds in which Y is -R-COO-, and R is a single bond, are appropriate, and those in which n is 10 to 30, particularly 10 to 26, are favorable. As specific examples thereof, for example, decyl hydroxybenzoate, dodecyl hydroxybenzoate, tetradecyl hydroxybenzoate, hexadecyl hydroxybenzoate, eicosyl hydroxybenzoate, docosyl hydroxybenzoate, and triacontyl hydroxybenzoate can be mentioned.

Among these monofunctional phenols, monofunctional phenols represented by the above formula [3] are preferable, alkyl-substituted or phenylalkyl-substituted phenols are more preferable, and p-tert-butylphenol, p-cumylphenol, and 2-phenylphenol are particularly preferable.

It is desirable that an end terminator composed of such a monofunctional phenol is introduced into at least 5 mol% of all ends, preferably at least 10 mol% of the ends, of the obtained polycarbonate resin. In addition, the end terminator may be used alone, and it is also possible to use a mixture of two or more kinds thereof.

The polycarbonate resin used as the component A of the invention may also be a polyester carbonate copolymerized with an aromatic dicarboxylic acid, for example, terephthalic acid, isophthalic acid, naphthalenedicarboxylic acid, or a derivative thereof, without impairing the gist of the invention.

The viscosity average molecular weight of the polycarbonate resin used as the component A of the invention is preferably within a range of 11,500 to 50,000, more preferably 12,500 to 40,000, still more preferably within a range of 13,500 to 35,000, and most preferably within a range of 15,000 to 30,000. When the molecular weight is more than the upper limit, the resulting melt viscosity may be too high, leading to inferior moldability, while when the molecular weight is less than the lower limit, problems with mechanical strength may arise. Incidentally, for the viscosity average molecular weight in the context of the invention, first, using an Ostwald viscometer, the specific viscosity calculated using the following formula is obtained from a solution of 0.7 g of a polycarbonate resin dissolved at 20°C in 100 ml of methylene chloride, and the obtained specific viscosity is inserted into the following formula to determine the viscosity average molecular weight Mv.

$$\text{Specific viscosity } (\eta_{SP}) = (t - t_0)/t_0$$

[$t_0$ is the number of seconds taken for methylene chloride to fall, and t is the number of seconds taken for the sample solution to fall]

$$\eta_{SP}/c = [\eta] + 0.45 \times [\eta]^2 c$$

(in which [η] is intrinsic viscosity)

$$[\eta] = 1.23 \times 10^{-4} Mv^{0.83}$$

$$c = 0.7$$

In the polycarbonate resin used as the component A of the invention, the total Cl (chlorine) content in the resin is preferably 0 to 500 ppm, and more preferably 0 to 350 ppm. When the total Cl content in the polycarbonate resin is within the above range, this leads to excellent hue and thermal stability and thus is preferable.

<Component B: Triarylphosphine>

The triarylphosphine used as the component B of the invention is a triarylphosphine having a specific structure shown by the following formula [1]. In a polycarbonate resin composition obtained by incorporating a triarylphosphine having this structure and a polycarbonate resin molded article thereof, discoloration upon exposure to a high-temperature

environment is suppressed.

[Chemical formula 6]

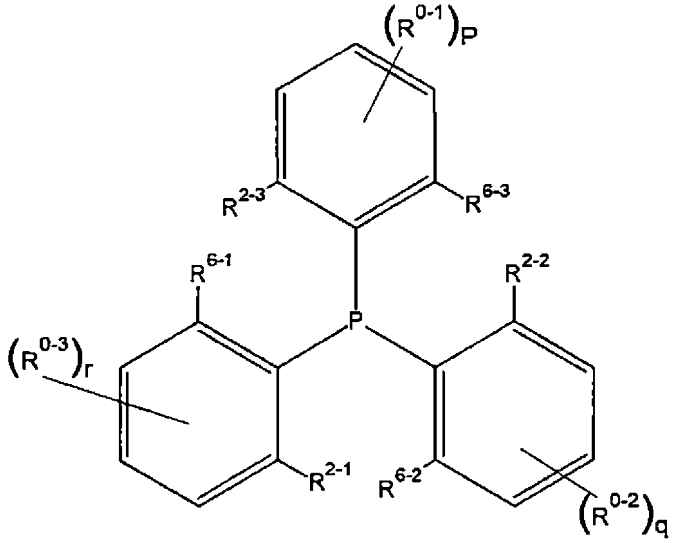

〔1〕

[In the formula, $R^{2-1}$, $R^{2-2}$, $R^{2-3}$, $R^{6-1}$, $R^{6-2}$, $R^{6-3}$, $R^{0-1}$, $R^{0-2}$, and $R^{0-3}$ are each a hydrogen atom, a hydrocarbon group, an alkoxy group, or a halogen and may be the same or different from each other, with the proviso that at least one of $R^{2-1}$, $R^{2-2}$, $R^{2-3}$, $R^{6-1}$, $R^{6-2}$, and $R^{6-3}$ is a hydrocarbon group, an alkoxy group, or a halogen, and p, q, and r are each an integer of 0 to 3.]

The hydrocarbon group is preferably an alkyl group, an aralkyl group, an alkenyl group, or an aryl group.

As alkyl groups, a methyl group, an ethyl group, a propyl group, a butyl group, a pentyl group, a hexyl group, a heptyl group, an octyl group, a nonyl group, a decyl group, a dodecyl group, a tetradecyl group, and the like can be mentioned. An alkyl group having 1 to 18 carbon atoms is preferable, an alkyl group having 1 to 12 carbon atoms is more preferable, an alkyl group having 1 to 8 carbon atoms is still more preferable, an alkyl group having 1 to 6 carbon atoms is particularly preferable, and an alkyl group having 1 to 4 carbon atoms is most preferable.

As aralkyl groups, a benzyl group, a phenylethyl group, and the like can be mentioned. An aralkyl group having 7 to 20 carbon atoms is preferable, an aralkyl group having 7 to 15 carbon atoms is more preferable, and an aralkyl group having 7 to 10 carbon atoms is still more preferable.

As alkenyl groups, a methenyl group, an ethenyl group, a propenyl group, a butenyl group, a pentenyl group, and the like can be mentioned. An alkenyl group having 2 to 10 carbon atoms is preferable, and an alkenyl group having 2 to 6 carbon atoms is more preferable.

As aryl groups, a phenyl group, a naphthyl group, and the like can be mentioned. An aryl group having 6 to 14 carbon atoms is preferable, and an aryl group having 6 to 10 carbon atoms is more preferable.

As alkoxy groups, a methoxy group, an ethoxy group, a propoxy group, a butoxy group, a pentoxy group, and the like can be mentioned. An alkoxy group having 1 to 10 carbon atoms is preferable, and an alkoxy group having 1 to 6 carbon atoms is more preferable.

As halogen atoms, a fluorine atom, a chlorine atom, and a bromine atom, and the like can be mentioned.

In addition, in the above formula [1], at least one of $R^{2-1}$, $R^{2-2}$, $R^{2-3}$, $R^{6-1}$, $R^{6-2}$, and $R^{6-3}$ is a hydrocarbon group, an alkoxy group, or a halogen atom, and is preferably an alkyl group or an alkoxy group. An alkyl group having 1 to 4 carbon atoms is particularly preferable.

p, q, and r are each an integer of 0 to 3, preferably an integer of 0 to 2, and more preferably 0 or 1.

Specifically, as triarylphosphines of the above formula [1], tri(o-tolyl)phosphine, tri(2,5-xylyl)phosphine, and tri(2,4-xylyl)phosphine can be mentioned.

The triarylphosphine content is preferably 0.001 to 0.1 parts by weight per 100 parts by weight of the polycarbonate resin. The content is more preferably 0.005 to 0.08 parts by weight, and still more preferably 0.01 to 0.07 parts by weight. When the content is less than the above range, the suppressing effect on discoloration upon exposure to a high-temperature environment may decrease, while when the content is more than the above range, the triarylphosphine volatilized upon the application of heat during molding processing, etc., may adhere to the mold, causing defects in the molded article.

<Other Components>

As long as the object of the invention is not impaired, the polycarbonate resin composition of the invention can incorporate additives known per se for imparting various functions of molded articles and improving their characteristics. Hereinafter, these additives will be specifically described.

(I) Other Heat Stabilizers

The polycarbonate resin composition of the invention can incorporate known various heat stabilizers. Specifically, phosphorus-based antioxidants, sulfur-based antioxidants, phenol-based antioxidants, and the like can be mentioned.

As specific examples of such phosphorus-based antioxidants, phosphorous acid (phosphites), phosphonites, phosphinites, phosphines, phosphoric acid (phosphates), phosphonates, phosphinates, and phosphine oxides are exemplified. Among them, phosphites, phosphonites, phosphines, phosphonates, and phosphates are preferably used. Specifically, as phosphite compounds, for example, trimethyl phosphite, triethyl phosphite, tripropyl phosphite, triisopropyl phosphite, tributyl phosphite, triphenyl phosphite, tris(nonylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, 2,2-methylenebis(4,6-di-tert-butylphenyl)octyl phosphite, tris(diethylphenyl) phosphite, tris(di-isopropylphenyl) phosphite, tris(di-n-butylphenyl) phosphite, tris(2,4-di-tert-butylphenyl) phosphite, tris(2,6-di-tert-butylphenyl) phosphite, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenyl bisphenol A pentaerythritol diphosphite, bis(nonylphenyl)pentaerythritol diphosphite, and dicyclohexyl pentaerythritol diphosphite can be mentioned. Further, as other phosphite compounds, those that react with dihydric phenols and have a cyclic structure can also be used. For example, 2,2'-methylenebis(4,6-di-tert-butylphenyl) (2,4-di-tert-butylphenyl) phosphite, 2,2'-methylenebis(4,6-di-tert-butylphenyl) (2-tert-butyl-4-methylphenyl) phosphite, 2,2'-methylenebis(4-methyl-6-tert-butylphenyl) (2-tert-butyl-4-methylphenyl) phosphite, and 2,2'-ethylidenebis(4-methyl-6-tert-butylphenyl) (2-tert-butyl-4-methylphenyl) phosphite can be mentioned.

As phosphonite compounds, tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite, bis(2,6-di-tert-butylphenyl)-3-phenyl-phenyl phosphonite, and the like can be mentioned. Tetrakis(di-tert-butylphenyl)-biphenylene diphosphonite and bis(di-tert-butylphenyl)-phenyl-phenyl phosphonite are preferable, and tetrakis(2,4-di-tert-butylphenyl)-biphenylene diphosphonite and bis(2,4-di-tert-butylphenyl)-phenyl-phenyl phosphonite are more preferable. It is possible and preferable that such a phosphonite compound is used together with the above phosphite compound having an aryl group with two or more alkyl substitutions.

As phosphine compounds, triethylphosphine, tripropylphosphine, tributylphosphine, trioctylphosphine, triamylphosphine, dimethylphenylphosphine, dibutylphenylphosphine, diphenylmethylphosphine, diphenyloctylphosphine, triphenylphosphine, tris(p-tolyl)phosphine, tris(p-anisyl)phosphine, trinaphthylphosphine, diphenylbenzylphosphine, and the like are exemplified. A particularly preferred phosphine compound is triphenyl phosphine.

As phosphonate compounds, dimethyl benzenephosphonate, diethyl benzenephosphonate, dipropyl benzenephosphonate, and the like can be mentioned.

As phosphate compounds, tributyl phosphate, trimethyl phosphate, tricresyl phosphate, triphenyl phosphate, trichlorophenyl phosphate, triethyl phosphate, diphenyl cresyl phosphate, diphenyl monoorthoxenyl phosphate, tributoxyethyl phosphate, dibutyl phosphate, dioctyl phosphate, diisopropyl phosphate, and the like can be mentioned, and triphenyl phosphate and trimethyl phosphate are preferable.

As specific examples of sulfur-based antioxidants, pentaerythritol tetrakis(3-laurylthiopropionate), pentaerythritol tetrakis(3-myristylthiopropionate), and pentaerythritol tetrakis(3-stearylthiopropionate) can be mentioned, and, in particular, pentaerythritol tetrakis(3-laurylthiopropionate), pentaerythritol tetrakis(3-myristylthiopropionate) dilauryl-3,3'-thiodipropionate, dimyristyl-3,3'-thiodipropionate, distearyl-3,3'-thiodipropionate, and the like can be mentioned. In particular, pentaerythritol tetrakis(3-laurylthiopropionate), pentaerythritol tetrakis(3-myristylthiopropionate), dilauryl-3,3'-thiodipropionate, and dimyristyl-3,3'-thiodipropionate are preferable, and pentaerythritol tetrakis(3-laurylthiopropionate) and dimyristyl-3,3'-thiodipropionate are particularly preferable.

As specific examples of phenol-based antioxidants, for example, Vitamin E, n-octadecyl-β-(4'-hydroxy-3',5'-di-tert-butylphenyl)propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethylene glycol-N-bis-3 -(3-tert-butyl-4-hydroxy-5-methylphenyl)propionate, 1,6-hexanediol bis[3-(3,5-di-tert-butyl-4-hydroxyphenyl)propionate, bis[2-tert-butyl-4-methyl-6-(3-tert-butyl-5-methyl-2-hydroxybenzyl) phenyl]terephthalate, 3,9-bis{2-[3-(3-tert-butyl-4-hydroxy-5-methylphenyl)propionyloxy]-1,1-dimethylethyl}-2,4,8,10-tetraoxaspiro [5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,4-bis(n-octylthio)-6-(4-hydroxy-3',5'-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl) benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris2[3(3,5-di-tert-butyl-4-hydroxyphenyl)propionyloxy] ethyl isocyanurate, and tetrakis[methylene-3-(3',5'-di-tert-butyl-4-hydroxyphenyl)propionate]methane can be mentioned and can be preferably used.

The phosphorus-based antioxidants, sulfur-based antioxidants, and phenol-based antioxidants mentioned above may each be used alone, and it is also possible to use two or more kinds together. The phosphorus-based antioxidant, sulfur-based antioxidant, and phenol-based antioxidant contents are each preferably 0.0001 to 1 part by weight per 100 parts by weight of the component A. The content is more preferably 0.0005 to 0.5 parts by weight, and still more preferably 0.001 to 0.2 parts by weight.

In particular, it is preferable to incorporate a pentaerythritol diphosphite-based compound. The pentaerythritol diphosphite-based compound is incorporated mainly for the purposes of suppressing discoloration at high temperatures when the polycarbonate resin composition of the invention is processed into pellet form using a melt kneader, as typified by a vented twin-screw extruder, and also suppressing discoloration when the polycarbonate resin composition of the invention is processed into a desired molded article using an injection molding machine or the like.

In addition, use of a triarylphosphine-based compound having a specific structure as the component B together suppresses yellowing during molding processing, leading to further enhancing effects on transparency and light guide performance.

As dipentaerythritol diphosphite-based compounds specifically used, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis(2,4-dicumylphenyl)pentaerythritol diphosphite, phenyl bisphenol A pentaerythritol diphosphite, bis(nonylphenyl)pentaerythritol diphosphite, dicyclohexyl pentaerythritol diphosphite, and the like can be mentioned. Bis(2,4-dicumylphenyl)pentaerythritol diphosphite and bis(2,6-di-tert-butyl-4-methylphenyl)pentaerythritol diphosphite are preferable, and bis(2,4-dicumylphenyl)pentaerythritol diphosphite is more preferable.

The pentaerythritol diphosphite-based compound content is preferably 0.005 to 0.1 parts by weight, more preferably 0.01 to 0.05 parts by weight, per 100 parts by weight of the polycarbonate resin of the component A. When the content is less than the above range, the suppressing effect on discoloration during molding processing, etc., may decrease, leading to the deterioration of transparency, while when the content is more than the above range, this may cause a decrease in the mechanical properties, dry heat resistance, or damp heat resistance of the material, and further mold contamination during molding.

(II) Release Agent

The polycarbonate resin composition of the invention can incorporate a release agent as necessary. As such release agents, those known per se can be used. For example, saturated fatty acid esters, unsaturated fatty acid esters, polyolefin-based waxes (polyethylene waxes and 1-alkene polymers can be mentioned; those modified with a functional group-containing compound, such as acid-modified ones, can also be used), silicone compounds, fluorine compounds, paraffin wax, and beeswax can be mentioned. Among them, saturated fatty acid esters, linear or cyclic polydimethylsiloxane oils, polymethylphenyl silicone oils, and fluorine oils are preferable. As particularly preferred release agents, saturated fatty acid esters can be mentioned, and, for example, monoglycerides such as stearic acid monoglyceride, polyglycerin fatty acid esters such as decaglycerin decastearate and decaglycerin tetrastearate, lower fatty acid esters such as stearic acid stearate, higher fatty acid esters such as sebacic acid behenate, and erythritol esters such as pentaerythritol tetrastearate are used. The content of such a release agent is preferably 0.01 to 1 part by weight per 100 parts by weight of the component A.

(III) UV Absorber

The polycarbonate resin composition of the invention can incorporate a UV absorber as necessary. As such UV absorbers, for example, benzophenone-based UV absorbers as typified by 2,4-dihydroxybenzophenone, 2-hydroxy-4-methoxybenzophenone, 2-hydroxy-4-n-octoxybenzophenone, 2-hydroxy-4-n-dodecyloxybenzophenone, 2-hydroxy-4-benzyloxybenzophenone, 2,2'-dihydroxy-4-methoxybenzophenone, 2-hydroxy-4-methoxy-2'-carboxybenzophenone, 2-hydroxy-4-methoxy-5-sulfoxybenzophenone, 2,2'-dihydroxy-4,4'-dimethoxybenzophenone, 2,2',4,4'-tetrahydroxybenzophenone, 2,2'-dihydroxy-4,4'-dimethoxy-5-sodium sulfoxybenzophenone, and bis(5-benzoyl-4-hydroxy-2-methoxyphenyl)methane can be mentioned.

In addition, as UV absorbers, for example, benzotriazole-based UV absorbers as typified by 2-(2'-hydroxy-5'-methylphenyl)benzotriazole, 2-(2'-hydroxy-5'-tert-butylphenyl)benzotriazole, 2-(2'-hydroxy-5'-tert-octylphenyl)benzotriazole, 2-(2'-hydroxy-3',5'-di-tert-butylphenyl)benzotriazole, 2-(2'-hydroxy-3',5'-di-tert-amylphenyl)benzotriazole, 2-(2'-hydroxy-3'-dodecyl-5'-methylphenyl)benzotriazole, 2-(2'-hydroxy-3',5'-bis(α,α'-dimethylbenzyl)phenyl)benzotriazole, 2-[2'-hydroxy-3'-(3",4",5",6"-tetraphthalimidomethyl)-5'-methylphenyl]benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, and 2,2'-methylenebis[4-(1,1,3,3-tetramethylbutyl)-6-(2H-benzotriazol-2-yl)phenol] can be mentioned.

Further, as UV absorbers, for example, hydroxyphenyltriazine-based compounds as typified by 2-(4,6-diphenyl-1,3,5-triazin-2-yl)-5-hexyloxy-phenol, 2-(4,6-bis-(2,4-dimethylphenyl-1,3,5-triazin-2-yl)-5-hexyloxy-phenol, and the like, and malonic acid ester-based compounds as typified by Hostavin PR-25 manufactured by Clariant Japan, Hostavin B-CAP manufactured by Clariant Japan, and the like, which are 2-(1-arylalkylidene)malonic acid esters, can be mentioned.

The UV absorber content is preferably 0.01 to 5 parts by weight, more preferably 0.02 to 1 part by weight, per 100 parts by weight of the component A.

(IV) Light Stabilizer

The polycarbonate resin composition of the invention can incorporate a light stabilizer as necessary. As such light stabilizers, for example, hindered amines as typified by bis(2,2,6,6-tetramethyl-4-piperidyl)sebacate, bis(1,2,2,6,6-pentamethyl-4-piperidyl)sebacate, bis(1,2,2,6,6-pentamethy-4-piperidyl)-2-(3,5-di-tert-butyl-4-hydroxybenzyl)-2n-butylmalonate, condensates of 1,2,3,4-butanecarboxylic acid, 2,2,6,6-tetramethyl-4-piperidinol, and tridecyl alcohol, condensates of 1,2,3,4-butanedicarboxylic acid, 1,2,2,6,6-pentamethyl-4-piperidinol, and tridecyl alcohol, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, poly{[6-(1,1,3,3-tetramethylbutyl)amino-1,3,5-triazine-2,4-diyl][(2,2,6,6-tetramethylpiperidyl)imino]hexamethylene[(2,2,6,6-tetramethylpiperidyl)imino]}, poly{[6-morpholino-s-triazine-2,4-diyl][(2,2,6,6-tetramethylpiperidyl)imino]hexamethylene[(2,2,6,6-tetramethylpiperidyl)imino]}, condensates of 1,2,3,4-butanetetracarboxylic acid, 2,2,6,6-tetramethyl-4-piperidinol, and β,β, β',β'-tetramethyl-3,9-(2,4,8,10-tetraoxaspiro[5,5]undecane)diethanol, condensates of N,N'-bis(3-aminopropyl)ethylenediamine and 2,4-bis[N-butyl-N-(1,2,2,6,6-pentamethyl-4-piperidyl)amino]-chloro-1,3,5-triazine, condensates of 1,2,3,4-butanetetracarboxylic acid, 1,2,2,6,6-pentamethyl-4-piperidinol, and β, β,β', β'-tetramethyl-3,9-(2,4,8,10-tetraoxaspiro[5,5]undecane)diethanol, and polymethylpropyl 3-oxy-[4-(2,2,6,6-tetramethyl)piperidinyl]siloxane can be mentioned. The light stabilizer content is preferably 0.001 to 5 parts by weight, more preferably 0.005 to 1 part by weight, per 100 parts by weight of the component A.

(V) Bluing Agent

The polycarbonate resin composition of the invention can incorporate a bluing agent in order to counteract yellowness caused by UV absorbers or the like. As bluing agents, those usually used for polycarbonate resins can be used without any particular inconvenience. Generally, anthraquinone-based dyes are easy to obtain and preferable. As specific bluing agents, for example, generic name Solvent Violet 13 [CA. No. (Color Index No.) 60725; trade names "MACROLEX Violet B" manufactured by Bayer, "Diaresin Blue G" manufactured by Mitsubishi Chemical Corporation, and "SUMIPLAST Violet B" manufactured by Sumitomo Chemical Co., Ltd.], generic name Solvent Violet 31 [CA. No. 68210; trade name "Diaresin Violet D" manufactured by Mitsubishi Chemical Corporation], generic name Solvent Violet 33 [CA. No. 60725; trade name "Diaresin Blue J" manufactured by Mitsubishi Chemical Corporation], generic name Solvent Blue 94 [CA. No. 61500; trade name "Diaresin Blue N" manufactured by Mitsubishi Chemical Corporation], generic name Solvent Violet 36 [CA. No. 68210; trade name "MACROLEX Violet 3R" manufactured by Bayer"], generic name Solvent Blue 97 [trade name "MACROLEX Blue RR" manufactured by Bayer], generic name Solvent Blue 45 [CA. No. 61110; trade name "Telazol Blue RLS" manufactured by Sand Corporation], and the like can be mentioned, and, in particular, MACROLEX Blue RR, MACROLEX Violet B, and Telazol Blue RLS are preferable. The bluing agent content is preferably 0.000005 to 0.001 parts by weight, more preferably 0.00001 to 0.0001 parts by weight, per 100 parts by weight of the component A.

(VI) Fluorescent Brightener

In the polycarbonate resin composition of the invention, fluorescent brighteners are not particularly limited as long as they are for use to improve the color tone of a resin or the like to make the color white or bluish white can be used without any particular limitation, and, for example, stilbene-based, benzimidazole-based, benzoxazole-based, naphthalimide-based, rhodamine-based, coumarin-based, and oxazine-based compounds can be mentioned. Specifically, for example, CI Fluorescent Brightener 219:1, EASTOBRITE OB-1 manufactured by Eastman Chemical Co., and "Hakkol PSR" manufactured by Showa Chemical Industry Co., Ltd., can be mentioned. Here, a fluorescent brightener acts to absorb energy in the UV region of light and emit this energy into the visible region. The fluorescent brightener content is preferably 0.001 to 0.1 parts by weight, more preferably 0.001 to 0.05 parts by weight, per 100 parts by weight of the component A.

(VII) Epoxy Compound

The polycarbonate resin composition of the invention can incorporate an epoxy compound as necessary. Such an epoxy compound is incorporated for the purpose of improving the damp heat resistance of the polycarbonate resin composition and can also suppress mold corrosion, and basically those having an epoxy functional group are all applicable. As specific examples of preferred epoxy compounds, 3,4-epoxycyclohexylmethyl-3',4'-epoxycyclohexylcarboxylate, 1,2-epoxy-4-(2-oxiranyl)cyclohexane adducts of 2,2-bis(hydroxymethyl)-1-butanol, copolymers of methyl methacrylate and glycidyl methacrylate, and copolymers of styrene and glycidyl methacrylate can be mentioned. The amount of such an epoxy compound added is preferably 0.003 to 0.3 parts by weight, more preferably 0.004 to 0.2 parts by weight, still more preferably 0.005 to 0.15 parts by weight, and particularly preferably 0.01 to 0.1 parts by weight, per 100 parts by weight of the component A.

(VIII) Organic Metal Salt

The polycarbonate resin composition of the invention can incorporate an organic metal salt compound. Such an organic metal salt is incorporated for the purpose of imparting flame retardancy, and is preferably an alkali (earth) metal salt of an organic acid having 1 to 50, preferably 1 to 40, carbon atoms, and more preferably an organic sulfonic acid alkali (earth) metal salt. Such organic sulfonic acid alkali (earth) metal salts include metal salts of fluorine-substituted alkylsulfonic acids such as a metal salt of a perfluoroalkylsulfonic acid having 1 to 10, preferably 2 to 8, carbon atoms with an alkali metal or an alkaline earth metal, as well as a metal salt of an aromatic sulfonic acid having 7 to 50, preferably 7 to 40, carbon atoms with an alkali metal or an alkaline earth metal. As metal salt-forming alkali metals, lithium, sodium, potassium, rubidium, and cesium can be mentioned, and as alkaline earth metals, beryllium, magnesium, calcium, strontium, and barium can be mentioned. Alkali metals are more favorable. Among such alkali metals, in the case where there is a higher demand for transparency, rubidium and cesium, which have larger ionic radii, are favorable. However, they are not versatile and also difficult to refine, and thus may consequently be disadvantageous in terms of cost. Meanwhile, metals having smaller ionic radii, such as lithium and sodium, may be rather disadvantageous in terms of flame retardancy. Alkali metals in sulfonic acid alkali metal salts can be selectively used taking these factors into account, but in any respect, sulfonic acid potassium salts, which have an excellent balance of characteristics, are most favorable. It is also possible to use such a potassium salt together with a sulfonic acid alkali metal salt composed of another alkali metal.

As specific examples of perfluoroalkylsulfonic acid alkali metal salts, potassium trifluoromethanesulfonate, potassium perfluorobutanesulfonate, potassium perfluorohexanesulfonate, potassium perfluorooctanesulfonate, sodium pentafluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate, and rubidium perfluorohexanesulfonate can be mentioned. They can be used alone, and it is also possible to use two or more kinds together. Here, the number of carbon atoms in the perfluoroalkyl group is preferably within a range of 1 to 18, more preferably within a range of 1 to 10, and still more preferably within a range of 1 to 8. Among them, potassium perfluorobutanesulfonate is particularly preferable. A perfluoroalkylsulfonic acid alkali (earth) metal salt composed of an alkali metal is usually contaminated with not a small amount of fluoride ions. The presence of such fluoride ions can be a factor that decreases the flame retardancy, and thus is preferably reduced as much as possible. The proportion of such fluoride ions can be measured by an ion chromatography method. The content of fluoride ions is preferably 100 ppm or less, more preferably 40 ppm or less, and particularly preferably 10 ppm or less. In addition, in terms of production efficiency, a content of 0.2 ppm or more is favorable. Such a perfluoroalkylsulfonic acid alkali (earth) metal salt having a reduced amount of fluoride ions can be produced using a known production method as the production method, and also using a method in which the amount of fluoride ions contained in the raw materials for the production of a fluorine-containing organic metal salt is reduced, a method in which hydrogen fluoride and the like resulting from the

reaction are removed using the gas generated during the reaction or by heating, a method in which the amount of fluoride ions is reduced using a purification method such as recrystallization or reprecipitation during the production of a fluorine-containing organic metal salt, or the like. In particular, because organic metal salt-based flame retardants are relatively soluble in water, production is preferably performed through steps in which dissolution and washing are performed at a temperature higher than the ambient temperature using ion-exchanged water, particularly water that satisfies an electrical resistance value of 18 MΩ·cm or more, that is, an electrical conductivity of about 0.55 μS/cm or less, followed by cooling and recrystallization.

As specific examples of aromatic sulfonic acid alkali (earth) metal salts, for example, disodium diphenylsulfide-4,4'-disulfonate, dipotassium diphenylsulfide-4,4'-disulfonate, potassium 5-sulfoisophthalate, sodium 5-sulfoisophthalate, polysodium polyethylene terephthalate polysulfonate, calcium 1-methoxynaphthalene-4-sulfonate, disodium 4-dodecylphenyl ether disulfonate, polysodium poly(2,6-dimethylphenyleneoxide)polysulfonate, polysodium poly(1,3-phenyleneoxide)polysulfonate, polysodium poly(1,4-phenyleneoxide)polysulfonate, polypotassium poly(2,6-diphenylphenyleneoxide)polysulfonate, lithium poly(2-fluoro-6-butylphenyleneoxide)polysulfonate, potassium sulfonate of benzenesulfonate, sodium benzenesulfonate, strontium benzenesulfonate, magnesium benzenesulfonate, dipotassium p-benzenedisulfonate, dipotassium naphthalene-2,6-disulfonate, calcium biphenyl-3,3'-disulfonate, sodium diphenylsulfone-3-sulfonate, potassium diphenylsulfone-3-sulfonate, dipotassium diphenylsulfone-3,3'-disulfonate, dipotassium diphenylsulfone-3,4'-disulfonate, sodium α,α,α-trifluoroacetophenone-4-sulfonate, dipotassium benzophenone-3,3'-disulfonate, disodium thiophene-2,5-disulfonate, dipotassium thiophene-2,5-disulfonate, calcium thiophene-2,5-disulfonate, sodium benzothiophenesulfonate, potassium diphenylsulfoxide-4-sulfonate, formalin condensates of sodium naphthalenesulfonate, and formalin condensates of sodium anthracenesulfonate can be mentioned. Among these aromatic sulfonic acid alkali (earth) metal salts, potassium salts are particularly favorable. Among these aromatic sulfonic acid alkali (earth) metal salts, potassium diphenylsulfone-3-sulfonate and dipotassium diphenylsulfone-3,3-disulfonate are favorable, and mixtures thereof (weight ratio between the former and the latter is 15/85 to 30/70) are particularly favorable.

As organic metal salts other than sulfonic acid alkali (earth) metal salts, alkali (earth) metal salts of sulfuric acid esters, alkali (earth) metal salts of aromatic sulfonamides, and the like are favorably exemplified. As alkali (earth) metal salts of sulfuric acid esters, alkali (earth) metal salts of sulfuric acid esters of monohydric and/or polyhydric alcohols can be particularly mentioned. As such sulfuric acid esters of monohydric and/or polyhydric alcohols, methyl sulfate, ethyl sulfate, lauryl sulfate, hexadecyl sulfate, sulfuric acid esters of polyoxyethylene alkylphenyl ethers, mono-, di-, tri-, and tetra-sulfuric acid esters of pentaerythritol, sulfuric acid esters of lauric acid monoglyceride, sulfuric acid esters of palmitic acid monoglyceride, sulfuric acid esters of stearic acid monoglyceride, and the like can be mentioned. As preferred alkali (earth) metal salts of such sulfuric acid esters, alkali (earth) metal salts of lauryl sulfate can be mentioned. As alkali (earth) metal salts of aromatic sulfonamides, for example, saccharin, alkali (earth) metal salts of N-(p-tolylsulfonyl)-p-toluenesulfimide, N-(N'-benzylaminocarbonyl)sulfanilimide, and N-(phenylcarboxyl)sulfanilimide can be mentioned. The organic metal salt content is preferably 0.001 to 1 part by weight, more preferably 0.005 to 0.5 parts by weight, still more preferably 0.01 to 0.3 parts by weight, and particularly preferably 0.03 to 0.15 parts by weight, per 100 parts by weight of the component A.

(IX) Polycaprolactone Compound

The polycarbonate resin composition of the invention can incorporate a polycaprolactone compound. Such a polycaprolactone compound has an improving effect on thermal stability when subjected to thermal history during molding processing, etc., and the hydrogen atoms in the methylene chain in the polycaprolactone repeating unit ($-CH_2-CH_2-CH_2-CH_2-CH_2-C(O)-O-$) may be partially substituted with a halogen atom or a hydrocarbon group. In addition, the terminal OH groups of the polycaprolactone compound may be subjected to a terminal treatment such as esterification or etherification, and not only polycaprolactone diol but also polycaprolactone triol and polycaprolactone tetraol are possible, that is, the structure may be bifunctional, trifunctional, or tetrafunctional. As the molecular weight of the polycaprolactone compound, the number average molecular weight in terms of polystyrene determined by GPC is within a range of 300 to 5,000, and those within a range of 500 to 4,000 are preferably used. The incorporation amount of such a polycaprolactone compound is preferably within a range of 0.2 to 1.5 parts by weight per 100 parts by weight of the component A.

(X) Polyalkylene Glycol Compound

The polycarbonate resin composition of the invention can incorporate a polyalkylene glycol compound. Such a polyalkylene glycol compound has an improving effect on thermal stability when subjected to thermal history during molding processing, etc., and, specifically, polyalkylene glycols having 2 to 6 carbon atoms, such as polyethylene glycol, polypropylene glycol, and polytetramethylene glycol, as well as derivatives thereof, can be mentioned. In addition, the terminal OH group of the polyalkylene glycol may be subjected to a terminal treatment such as esterification or

etherification. As the molecular weight of the polyalkylene glycol, the number average molecular weight in terms of polystyrene determined by GPC is within a range of 300 to 5,000, and those within a range of 500 to 4,000 are preferably used. The incorporation amount of such a polyalkylene glycol compound is preferably within a range of 0.2 to 1.5 parts by weight per 100 parts by weight of the component A.

(XI) Others

In addition to the above, as long as the object of the invention is not impaired, the resin composition of the invention can incorporate additives known per se for imparting various functions to molded articles and improving their characteristics. As such additives, reinforcing fillers, sliding agents (e.g., PTFE particles), colorants, fluorescent dyes, inorganic phosphors (e.g. phosphors whose mother crystal is an aluminate), antistatic agents, crystal nucleating agents, inorganic and organic antibacterial agents, photocatalytic antifouling agents (e.g., microparticulate titanium oxide, microparticulate zinc oxide), light diffusing agents, flow modifiers, radical generators, IR absorbers (heat ray absorbers), photochromic agents, and the like can be mentioned.

<Production of Polycarbonate Resin Composition>

Any method can be employed to produce the polycarbonate resin composition of the invention. For example, a method in which the component A, the component B, and optionally other components are each thoroughly mixed using a premixing means such as a V-shaped blender, a Henschel mixer, a mechanochemical apparatus, or an extrusion mixer, subsequently granulated using an extrusion granulator, a briquetting machine, or the like as necessary, then melt-kneaded using a melt kneader as typified by a vented twin-screw extruder, and pelletized using an equipment such as a pelletizer , can be mentioned. As alternative methods, a method in which the component A, the component B, and optionally other components are each independently fed to a melt kneader as typified by a vented twin-screw extruder, a method in which the component A and some of other components are pre-mixed and then independently fed to a melt kneader with the rest of components, a method in which the component B is diluted and mixed with water or an organic solvent and then fed to a melt kneader, or the diluted mixture is pre-mixed with other components and then fed to a melt kneader, and the like can also be mentioned. Incidentally, when some of the components to be incorporated are liquid, a so-called liquid injection apparatus or liquid addition apparatus can be used for feeding to a melt kneader.

<Production of Molded Article>

Any method can be employed to produce a molded article made of the polycarbonate resin composition of the invention. For example, the polycarbonate resin composition can be kneaded using an extruder, a Banbury mixer, a roll, or the like, and then formed into a molded article by a conventionally known method such as injection molding, extrusion molding, or compression molding.
Molded articles molded from the resin composition of the invention can be favorably used for various industrial applications in the fields of lighting including LED lighting, office automation equipment, electrical and electronic equipment, automobiles, building materials, and the like.

Examples

Hereinafter, further description will be given with reference to examples, but the invention is not limited to these examples. Incidentally, the details of each component used and the evaluation methods are as follows.

(Embodiment 1)

(Component A)

A: Bisphenol A aromatic polycarbonate resin (manufactured by Teijin Limited: CM-1000, viscosity average molecular weight 15,200)

(Component B)

B-1: Tri(o-tolyl)phosphine (manufactured by Tokyo Chemical Industry Co., Ltd.)
B-2: Tri(2,5-xylyl)phosphine (manufactured by FUJIFILM Wako Pure Chemical Corporation)

(Comparative Examples of Component B)

Z-1: Triphenylphosphine (trade name JC-263 manufactured by Johoku Chemical Co., Ltd.)
Z-2: Tri(m-tolyl)phosphine (manufactured by Tokyo Chemical Industry Co., Ltd.)
Z-3: Tri(p-tolyl)phosphine (manufactured by Tokyo Chemical Industry Co., Ltd.)
Z-4: Tri(3,5-xylyl)phosphine (manufactured by FUJIFILM Wako Pure Chemical Corporation)
Z-5: Tris(4-methoxyphenyl)phosphine (manufactured by Tokyo Chemical Industry Co., Ltd.)

(Evaluation Method)

<Dry Heat Resistance (Thermal Stability) Evaluation>

The polycarbonate resin composition in pellet form obtained from each example composition was dried in a hot-air circulation dryer at 120°C for 5 hours and, using an injection molding machine [J85-ELIII manufactured by The Japan Steel Works, Ltd.], formed into a molded plate having a width of 50 mm, a length of 90 mm, and a thickness of 2 mm at a molding temperature of 270°C and a mold temperature of 80°C. This molded plate was subjected to a heating treatment in a hot-air circulation dryer at 130°C for 500 hours and for 1,000 hours. The yellowness index (YI) of the molded plate before the heating treatment and that of the molded plate after the heating treatment were measured and calculated using an integrating sphere spectrophotometer [CE-7000A manufactured by X-Rite (YI before and after the 500-hour heating treatment), Ci7800 manufactured by X-Rite (YI before and after the 1000-hour heating treatment)] in accordance with ASTM-D1925 using a C light source, a viewing angle of 2°, and a transmission method. The degree of increase in YI ($\Delta$YI) of the molded plate after the heating treatment was calculated using the following formula to evaluate the dry heat resistance. The larger the $\Delta$YI is, the more likely the polycarbonate resin is to turn yellow, indicating poorer dry heat resistance.

$$\Delta YI = YI \text{ after heating treatment} - YI \text{ before heating treatment}$$

[Examples A-1 to A-6 and Comparative Examples A-1 to A-6]

The component A, the component B, and other components were mixed in a blender in the respective incorporation amounts shown in Table 1, and then melt-kneaded using a vented twin-screw extruder to obtain a polycarbonate resin composition in pellet form. As the vented twin-screw extruder, TEX30$\alpha$ (fully intermeshed, co-rotating, double-threaded screw) manufactured by The Japan Steel Works, Ltd., was used. The extrusion conditions were as follows: discharge rate: 30 kg/h, screw rotation speed: 208 rpm, extrusion temperature: 260°C, vent vacuum level: 1 kPa. Using the obtained pellets, the dry heat resistance was evaluated as described in the above evaluation method. The evaluation results are shown in Table 1.

[Table 1]

| | | | | Example A-1 | Example A-2 | Example A-3 | Example A-4 | Example A-5 | Example A-6 | Comparative Example A-1 | Comparative Example A-2 | Comparative Example A-3 | Comparative Example A-4 | Comparative Example A-5 | Comparative Example A-6 |
|---|---|---|---|---|---|---|---|---|---|---|---|---|---|---|---|
| Composition (parts by mass) | Component A | A | CM-1000 | 100 | 100 | 100 | 100 | 100 | 100 | 100 | 100 | 100 | 100 | 100 | 100 |
| | Component B | B-1 | Tri(o-tolyl)phosphine | 0.01 | 0.03 | 0.05 | 0.07 | 0.10 | | | | | | | |
| | | B-2 | Tri(2,5-xylyl)phosphine | | | | | | 0.05 | | | | | | |
| | Other Components | Z-1 | Triphenylphosphine | | | | | | | | 0.05 | | | | |
| | | Z-2 | Tri(m-tolyl)phosphine | | | | | | | | | 0.05 | | | |
| | | Z-3 | Tri(p-tolyl)phosphine | | | | | | | | | | 0.05 | | |
| | | Z-4 | Tri(3,5-xylyl)phosphine | | | | | | | | | | | 0.05 | |
| | | Z-5 | Tris(4-methoxyphenyl)phosphine | | | | | | | | | | | | 0.05 |
| Evaluation Results | Dry Heat Resistance ΔYI | 500-hr Heating | YI after heating treatment - YI before heating treatment | 0.3 | 0.2 | 0.1 | - | - | - | 0.9 | 0.4 | - | 0.5 | - | 0.6 |
| | | 1000-hr Heating | YI after heating treatment - YI before heating treatment | 0.9 | 0.6 | 0.5 | 0.5 | 0.6 | 0.9 | 1.4 | 1.2 | 1.6 | 1.3 | 1.8 | 1.5 |

(Embodiment 2)

<Component A>

A-1: Bisphenol A aromatic polycarbonate resin (CM-1000, manufactured by Teijin Limited, viscosity average molecular weight 15,000)
A-2: Bisphenol A aromatic polycarbonate resin obtained by blending the above A-1 and the following A-3 in a ratio of 50:50 parts by weight and adjusted to a viscosity average molecular weight equivalent to 17,000
A-3: Bisphenol A aromatic polycarbonate resin (L-1225WL, manufactured by Teijin Limited, viscosity average molecular weight 18,500)
A-4: Bisphenol A aromatic polycarbonate resin (manufactured by Teijin Limited: L-1225WX, viscosity average molecular weight 20,000)

<Component B>

B-1: Tri(o-tolyl)phosphine (manufactured by Tokyo Chemical Industry Co., Ltd.)
B-2: Tri(2,5-xylyl)phosphine (manufactured by FUJIFILM Wako Pure Chemical Corporation)

<Component C>

C-1: Bis(2,4-dicumylphenyl)pentaerythritol diphosphite (Revonox 608, manufactured by Chimei)
C-2: Bis(2,6-di-tert-butyl-4-methylphenyl)pentaerythritol diphosphite (PEP-36, manufactured by ADEKA Corporation)

<Component E>

E-1: Glycerin monostearate (RIKEMAL S-100A, manufactured by Riken Vitamin Co., Ltd.)
E-2: Pentaerythritol tetrastearate (Unistar H-476, manufactured by NOF Corporation)

<Other Components>

Z-1: Triphenylphosphine (trade name JC-263 manufactured by Johoku Chemical Co., Ltd.)
Z-2: Tri(m-tolyl)phosphine (manufactured by Tokyo Chemical Industry Co., Ltd.)
Z-3: Tri(p-tolyl)phosphine (manufactured by Tokyo Chemical Industry Co., Ltd.)
Z-4: Tri(3,5-xylyl)phosphine (manufactured by FUJIFILM Wako Pure Chemical Corporation)
Z-6: Tris(2,4-di-tert-butylphenyl) phosphite (IRGAFOS 168, manufactured by BASF)

(Evaluation Method)

<Blue LED Light Guide Performance Evaluation>

The polycarbonate resin composition in pellet form obtained from each example composition was dried in a hot-air circulation dryer at 120°C for 5 hours and, using an injection molding machine (J180ADS-110U manufactured by The Japan Steel Works, Ltd.), formed into a molded article for light guide performance evaluation having a width of 10 mm, a thickness of 10 mm, and a length of 300 mm under the following condition: molding temperature: 270°C, mold temperature: 80°C, molding cycle: 100 seconds, residence time: 220 seconds. Incidentally, the mold used for molding had #5000 mirror-finished cavity and core portions, and the molded article used to perform the evaluation was a molded article with a good appearance, which was free of appearance defects such as silver streaks, voids, sink marks, and flow marks.

In a dark room adjusted to a room temperature of 23°C, a blue LED lamp (φ5 mm bullet-shaped LED, Model: LP-V5YL5111A, manufactured by Opto Supply) was placed so that the distance between one end face part of this molded article (10-mm-wide, 10-mm-thick surface) and the tip of the blue LED lamp was 3 mm.

An illuminometer (digital illuminometer, Model: LX-3000, manufactured by CUSTOM corporation) was installed so that the distance between the molded article end face part (10-mm-wide, 10-mm-thick surface) on the opposite side to the surface where the blue LED lamp was placed and the sensor tip of the illuminometer was 8 mm.

A 100-V commercial power supply was transformed by a switching AC adapter with DC 5 V, 2.0 A output (Model: GF12-US0520, manufactured by GO FORWARD ENTERPRISE CORP.), and the blue LED lamp was connected thereto and turned on.

After an adjustment was made so that light from the blue LED lamp entered the center of the molded article end face, an adjustment was made so that the blue LED light after passing through the 300-mm-long molded article was received at the center of the illuminometer sensor part placed on the opposite side, and, using an illuminometer with a white light source set as the assumed light source, the illuminance after passing through the 300-mm-long molded article was measured and evaluated.

The higher the illuminance after passing through the molded article is, the less the light attenuates while passing through the molded article, indicating higher blue LED light guide performance.

<White LED Light Guide Performance Evaluation>

Using the same molded article for light guide performance evaluation as that used in the above blue LED light guide performance evaluation, in a dark room adjusted to a room temperature of 23°C, a white LED lamp (φ3 mm bullet-shaped LED, Model: NSPW310DS, manufactured by Nichia Corporation, with a φ2.2 mm orifice attached to the tip) was placed so that the distance between one end face part of this molded article (10-mm-wide, 10-mm-thick surface) and the tip of the white LED lamp was 3 mm.

An illuminometer (digital illuminometer, Model: LX-3000, manufactured by CUSTOM corporation) was installed so that the distance between the molded article end face part (10-mm-wide, 10-mm-thick surface) on the opposite side to the surface where the white LED lamp was placed and the sensor tip of the illuminometer was 8 mm.

A 100-V commercial power supply was transformed by a switching AC adapter with DC 5 V, 2.0 A output (Model: GF12-US0520, manufactured by GO FORWARD ENTERPRISE CORP.), and the white LED lamp was connected thereto and turned on.

After an adjustment was made so that light from the white LED lamp entered the center of the molded article end face, an adjustment was made so that the white LED light after passing through the 300-mm-long molded article was received at the center of the illuminometer sensor part placed on the opposite side, and, using an illuminometer with a white light source set as the assumed light source, the illuminance after passing through the 300-mm-long molded article was measured and evaluated.

The higher the illuminance after passing through the molded article is, the less the light attenuates while passing through the molded article, indicating higher white LED light guide performance.

<Dry Heat Resistance (Thermal Stability) Evaluation>

The polycarbonate resin composition in pellet form obtained from each example composition was dried in a hot-air circulation dryer at 120°C for 5 hours and, using an injection molding machine [J85-ELIII manufactured by The Japan Steel Works, Ltd.], formed into a molded plate having a width of 50 mm, a length of 90 mm, and a thickness of 2 mm under the following conditions: molding temperature: 270°C, mold temperature: 80°C, molding cycle: 50 seconds, residence time: 100 seconds.

This molded plate was subjected to a heating treatment for 1,000 hours in a hot-air circulation dryer at 130°C. The yellowness index (YI) of the molded plate before the heating treatment and that of the molded plate after the 1,000-hour heating treatment were measured using an integrating sphere spectrophotometer (Ci-7800 manufactured by X-Rite) in accordance with ASTM-D1925 using a C light source, a viewing angle of 2°, and a transmission method. The degree of increase in YI (ΔYI) of the molded plate after the heating treatment was calculated using the following formula to evaluate the dry heat resistance. The larger the ΔYI is, the more likely the polycarbonate resin is to turn yellow, indicating poorer dry heat resistance.

ΔYI = YI after 1,000-hour heating treatment - YI before heating treatment

[Examples B-1 to B-14, Comparative Examples B-1 to B-5]

The component A, the component B, the component C, and other components were mixed in a blender in the

respective incorporation amounts shown in Table 2 and Table 3, and then melt-kneaded using a vented twin-screw extruder to obtain a polycarbonate resin composition in pellet form. As the vented twin-screw extruder, TEX30α (fully intermeshed, co-rotating, double-threaded screw) manufactured by The Japan Steel Works, Ltd., was used. The extrusion conditions were as follows: discharge rate: 30 kg/h, screw rotation speed: 208 rpm, extrusion temperature: 260°C, vent vacuum level: 1 kPa. Using the obtained pellets, the blue LED light guide performance, white LED light guide performance, and dry heat resistance were evaluated as described in the above evaluation methods. The evaluation results are shown in Table 2 and Table 3.

In the evaluation pass/fail judgment columns of Tables 2 and 3, those with a blue LED light guide performance of 75 lx (lux) or more were given a pass, those with a white LED light guide performance of 750 lx (lux) or more were given a pass, and those with a dry heat resistance of 1.0 or less were given a pass. As an overall judgment, a composition that was within the pass ranges for all items of blue LED light guide performance, white LED light guide performance, and dry heat resistance was deemed to have passed, and those that passed were marked with "A", while those that failed (outside the pass ranges) were marked with "B".

[Table 2]

| | | | | Examples | | | | | | | | | | | | | |
|---|---|---|---|---|---|---|---|---|---|---|---|---|---|---|---|---|---|
| | | | | B-1 | B-2 | B-3 | B-4 | B-5 | B-6 | B-7 | B-8 | B-9 | B-10 | B-11 | B-12 | B-13 | B-14 |
| Composition (parts by mass) | Component A | A-1 | PC resin (MW: 15000) | 100 | 100 | 100 | 100 | 100 | 100 | 100 | 100 | 100 | 100 | 100 | | | |
| | | A-2 | PC resin (MW: 17000) | | | | | | | | | | | | 100 | | |
| | | A-3 | PC resin (MW: 18500) | | | | | | | | | | | | | 100 | |
| | | A-4 | PC resin (MW: 20000) | | | | | | | | | | | | | | 100 |
| | Component B | B-1 | Tri(o-tolyl)phosphine | 0.05 | 0.05 | 0.01 | 0.10 | | 0.05 | 0.05 | 0.05 | 0.05 | 0.05 | 0.05 | 0.05 | 0.05 | 0.05 |
| | | B-2 | Tri(2,5-xylyl)phosphine | | | | | 0.05 | | | | | | | | | |
| | Component C | C-1 | Revonox 608 | 0.03 | 0.03 | 0.03 | 0.03 | 0.03 | 0.005 | 0.10 | | | 0.03 | 0.03 | 0.03 | 0.03 | 0.03 |
| | | C-2 | PEP 36 | | | | | | | | 0.005 | 0.02 | | | | | |
| | Component E | E-1 | RIKEMAL S100A | | 0.05 | 0.05 | 0.05 | 0.05 | 0.05 | 0.05 | 0.05 | 0.05 | 0.10 | | 0.05 | 0.05 | 0.05 |
| | | E-2 | Unistar H-476 | | | | | | | | | | | 0.20 | | | |
| Evaluation Results | Light Guide Performance (lx) | Blue LED | Illuminance after passing through 300-mm-long molded article | 85 | 86 | 81 | 82 | 75 | 79 | 86 | 82 | 87 | 86 | 86 | 80 | 76 | 75 |
| | | White LED | Illuminance after passing through 300-mm-long molded article | 759 | 761 | 754 | 765 | 755 | 752 | 764 | 759 | 764 | 764 | 762 | 756 | 753 | 751 |
| | Dry Heat Resistance ΔYI | 1000-hr Treatment | YI after treatment - YI before treatment | 0.5 | 0.7 | 1.0 | 0.7 | 1.0 | 0.8 | 0.6 | 0.6 | 1.0 | 0.6 | 0.9 | 0.7 | 0.9 | 0.8 |
| Pass/Fail Judgment | Light Guide Performance (lx) | Blue LED | Pass Criteria ≥ 75 | A | A | A | A | A | A | A | A | A | A | A | A | A | A |
| | | White LED | Pass Criteria ≥ 750 | A | A | A | A | A | A | A | A | A | A | A | A | A | A |
| | Dry Heat Resistance ΔYI | 1000-hr Heating | Pass Criteria ≤ 1.0 | A | A | A | A | A | A | A | A | A | A | A | A | A | A |
| | Overall Judgment | | Pass Criteria: All evaluation items passed | A | A | A | A | A | A | A | A | A | A | A | A | A | A |

[Table 3]

| | | | | Comparative Examples | | | | |
|---|---|---|---|---|---|---|---|---|
| | | | | B-1 | B-2 | B-3 | B-4 | B-5 |
| Composition (parts by mass) | Component A | A-1 | PC resin (MW: 15000) | 100 | 100 | 100 | 100 | 100 |
| | Component B | B-1 | Tri(o-tolyl)phosphine | | | | | |
| | Component C | C-1 | Revonox 608 | 0.03 | 0.03 | 0.03 | 0.03 | 0.03 |
| | | C-2 | PEP 36 | | | | | |
| | Component E | E-1 | RIKEMAL S100A | 0.05 | 0.05 | 0.05 | 0.05 | 0.05 |
| | Other Components | Z-1 | Triphenylphosphine | 0.05 | | | | |
| | | Z-2 | Tri(m-tolyl)phosphine | | 0.05 | | | |
| | | Z-3 | Tri(p-tolyl)phosphine | | | 0.05 | | |
| | | Z-4 | Tri(3,5-xylyl)phosphine | | | | 0.05 | |
| | | Z-6 | IRGAFOS 168 | | | | | 0.05 |
| Evaluation Results | Light Guide Performance (lx) | Blue LED | Illuminance after passing through 300-mm-long molded article | 52 | 49 | 48 | 40 | 70 |
| | | White LED | Illuminance after passing through 300-mm-long molded article | 758 | 752 | 748 | 746 | 757 |
| | Dry Heat Resistance ΔYI | 1000-hr Treatment | YI after treatment - YI before treatment | 1.4 | 1.8 | 2.1 | 2.0 | 1.0 |
| Pass/Fail Judgment | Light Guide Performance (lx) | Blue LED | Pass Criteria ≥ 75 | B | B | B | B | B |
| | | White LED | Pass Criteria ≥ 750 | A | A | B | B | A |
| | Dry Heat Resistance ΔYI | 1000-hr Heating | Pass Criteria ≤ 1.0 | B | B | B | B | A |
| | Overall Judgment | | Pass Criteria: All evaluation items passed | B | B | B | B | B |

(Embodiment 3)

<Component A>

A-1: Bisphenol A aromatic polycarbonate resin (CM-1000 manufactured by Teijin Limited, viscosity average molecular weight 15,000)
A-2: Bisphenol A aromatic polycarbonate resin obtained by blending the above A-1 and the following A-3 in a ratio of 50:50 parts by weight and adjusted to a viscosity average molecular weight equivalent to 17,000
A-3: Bisphenol A aromatic polycarbonate resin (L-1225WL, manufactured by Teijin Limited, viscosity average molecular weight 18,500)
A-4: Bisphenol A aromatic polycarbonate resin (manufactured by Teijin Limited: L-1225WX, viscosity average molecular weight 20,000)

<Component B>

B-1: Tri(o-tolyl)phosphine (manufactured by Tokyo Chemical Industry Co., Ltd.)
B-2: Tri(2,5-xylyl)phosphine (manufactured by FUJIFILM Wako Pure Chemical Corporation)

<Component C>

C-1: Bis(2,4-dicumylphenyl)pentaerythritol diphosphite (Revonox 608, manufactured by Chimei)
C-2: Bis(2,6-di-tert-butyl-4-methylphenyl)pentaerythritol diphosphite (PEP-36, manufactured by ADEKA Corporation)

<Component D>

D-1: Epoxy group-containing compound (MARPROOF G-0250SP, manufactured by NOF Corporation)

<Component E>

E-1: Glycerin monostearate (RIKEMAL S-100A, manufactured by Riken Vitamin Co., Ltd.)
E-2: Pentaerythritol tetrastearate (Unistar H-476, manufactured by NOF Corporation)

<Other Components>

Z-1: Triphenylphosphine (trade name JC-263 manufactured by Johoku Chemical Co., Ltd.)
Z-2: Tri(m-tolyl)phosphine (manufactured by Tokyo Chemical Industry Co., Ltd.)
Z-3: Tri(p-tolyl)phosphine (manufactured by Tokyo Chemical Industry Co., Ltd.)
Z-4: Tri(3,5-xylyl)phosphine (manufactured by FUJIFILM Wako Pure Chemical Corporation)
Z-6: Tris(2,4-di-tert-butylphenyl) phosphite (IRGAFOS 168, manufactured by BASF)

(Evaluation Method)

<Blue LED Light Guide Performance Evaluation>

The polycarbonate resin composition in pellet form obtained from each example composition was dried in a hot-air circulation dryer at 120°C for 5 hours and, using an injection molding machine (J180ADS-110U manufactured by The Japan Steel Works, Ltd.), formed into a molded article for light guide performance evaluation having a width of 10 mm, a thickness of 10 mm, and a length of 300 mm under the following condition: molding temperature: 270°C, mold temperature: 80°C, molding cycle: 100 seconds, residence time: 220 seconds. Incidentally, the mold used for molding had #5000 mirror-finished cavity and core portions, and the molded article used to perform the evaluation was a molded article with a good appearance, which was free of appearance defects such as silver streaks, voids, sink marks, and flow marks.

In a dark room adjusted to a room temperature of 23°C, a blue LED lamp (φ5 mm bullet-shaped LED, Model: LP-V5YL5111A, manufactured by Opto Supply) was placed so that the distance between one end face part of this molded article (10-mm-wide, 10-mm-thick surface) and the tip of the blue LED lamp was 3 mm.

An illuminometer (digital illuminometer, Model: LX-3000, manufactured by CUSTOM corporation) was installed so that the distance between the molded article end face part (10-mm-wide, 10-mm-thick surface) on the opposite side to the surface where the blue LED lamp was placed and the sensor tip of the illuminometer was 8 mm.

A 100-V commercial power supply was transformed by a switching AC adapter with DC 5 V, 2.0 A output (Model: GF12-US0520, manufactured by GO FORWARD ENTERPRISE CORP.), and the blue LED lamp was connected thereto and turned on.

After an adjustment was made so that light from the blue LED lamp entered the center of the molded article end face, an adjustment was made so that the blue LED light after passing through the 300-mm-long molded article was received at the center of the illuminometer sensor part placed on the opposite side, and, using an illuminometer with a white light source set as the assumed light source, the illuminance after passing through the 300-mm-long molded article was measured and evaluated.

The higher the illuminance after passing through the molded article is, the less the light attenuates while passing through the molded article, indicating higher blue LED light guide performance.

<White LED Light Guide Performance Evaluation>

Using the same molded article for light guide performance evaluation as that used in the above blue LED light guide performance evaluation, in a dark room adjusted to a room temperature of 23°C, a white LED lamp (φ3 mm bullet-shaped LED, Model: NSPW310DS, manufactured by Nichia Corporation, with a φ2.2 mm orifice attached to the tip) was placed so that the distance between one end face part of this molded article (10-mm-wide, 10-mm-thick surface) and the tip of the white LED lamp was 3 mm.

An illuminometer (digital illuminometer, Model: LX-3000, manufactured by CUSTOM corporation) was installed so that the distance between the molded article end face part (10-mm-wide, 10-mm-thick surface) on the opposite side to the surface where the white LED lamp was placed and the sensor tip of the illuminometer was 8 mm.

A 100-V commercial power supply was transformed by a switching AC adapter with DC 5 V, 2.0 A output (Model: GF12-US0520, manufactured by GO FORWARD ENTERPRISE CORP.), and the white LED lamp was connected thereto and turned on.

After an adjustment was made so that light from the white LED lamp entered the center of the molded article end face, an adjustment was made so that the white LED light after passing through the 300-mm-long molded article was received at the center of the illuminometer sensor part placed on the opposite side, and, using an illuminometer with a white light source set as the assumed light source, the illuminance after passing through the 300-mm-long molded article was measured and evaluated.

The higher the illuminance after passing through the molded article is, the less the light attenuates while passing through the molded article, indicating higher white LED light guide performance.

<Dry Heat Resistance Evaluation>

The polycarbonate resin composition in pellet form obtained from each example composition was dried in a hot-air circulation dryer at 120°C for 5 hours and, using an injection molding machine [J85-ELIII manufactured by The Japan Steel Works, Ltd.], formed into a molded plate having a width of 50 mm, a length of 90 mm, and a thickness of 2 mm under the following conditions: molding temperature: 270°C, mold temperature: 80°C, molding cycle: 50 seconds, residence time: 100 seconds.

This molded plate was subjected to a heating treatment for 1,000 hours in a hot-air circulation dryer at 130°C. The yellowness index (YI) of the molded plate before the heating treatment and that of the molded plate after the 1,000-hour heating treatment were measured using an integrating sphere spectrophotometer [Ci-7800 manufactured by X-Rite] in accordance with ASTM-D1925 using a C light source, a viewing angle of 2°, and a transmission method. The degree of increase in YI (ΔYI) of the molded plate after the heating treatment was calculated using the following formula to evaluate the dry heat resistance. The larger the ΔYI is, the more likely the polycarbonate resin is to turn yellow, indicating poorer dry heat resistance.

ΔYI = YI after 1,000-hour heating treatment - YI before heating treatment

<Damp Heat Resistance Evaluation>

The same 2-mm-thick molded article as in the above dry heat resistance evaluation was subjected to a damp heat treatment in a steam sterilizer (SN-510, manufactured by Yamato Scientific Co., Ltd.) at a temperature of 120°C and a humidity of 100% RH for 24 hours, and the haze value (HAZE) of the molded plate was measured before and after the damp heat treatment using a haze meter (NDH 4000, manufactured by Nippon Denshoku Industries Co., Ltd.) in accordance with ISO14782. The degree of increase in HAZE (ΔHAZE) of the molded plate after the damp heat treatment was calculated from the following formula to evaluate the damp heat resistance. The larger the ΔHAZE is, the more likely the polycarbonate resin is to degrade in a damp heat environment, indicating poorer damp heat resistance.

ΔHAZE = HAZE after 24-hour damp heat treatment - HAZE before damp heat treatment

[Examples C-1 to C-25, Comparative Examples C-1 to C-5]

The component A, the component B, the component C, the component D, and other components were mixed in a blender in the respective incorporation amounts shown in Tables 4 to 6, and then melt-kneaded using a vented twin-screw extruder to obtain a polycarbonate resin composition in pellet form. As the vented twin-screw extruder, TEX30α (fully intermeshed, co-rotating, double-threaded screw) manufactured by The Japan Steel Works, Ltd., was used. The extrusion conditions were as follows: discharge rate: 30 kg/h, screw rotation speed: 208 rpm, extrusion temperature: 260°C, vent vacuum level: 1 kPa. Using the obtained pellets, the blue LED light guide performance, white LED light guide performance,

dry heat resistance, and damp heat resistance were evaluated as described in the above evaluation method. The evaluation results are shown in Tables 4 to 6.

In the evaluation pass/fail judgment columns of Tables 4 to 6, those with a blue LED light guide performance of 75 lx (lux) or more were given a pass, those with a white LED light guide performance of 750 lx (lux) or more were given a pass, those with a dry heat resistance of 1.0 or less were given a pass, and those with a damp heat resistance of 15 or less were given a pass. As an overall judgment, a composition that was within the pass ranges for all items of blue LED light guide performance, white LED light guide performance, dry heat resistance, and damp heat resistance was deemed to have passed, and those that passed were marked with "A", while those that failed (outside the pass ranges) were marked with "B".

[Table 4]

| | | | | Examples | | | | | | | | | | | | |
|---|---|---|---|---|---|---|---|---|---|---|---|---|---|---|---|---|
| | | | | C-1 | C-2 | C-3 | C-4 | C-5 | C-6 | C-7 | C-8 | C-9 | C-10 | C-11 | C-12 | C-13 |
| Composition (parts by mass) | Component A | A-1 | PC resin (MW: 15000) | 100 | 100 | 100 | 100 | 100 | 100 | 100 | 100 | 100 | 100 | 100 | 100 | 100 |
| | | A-2 | PC resin (MW: 17000) | | | | | | | | | | | | | |
| | | A-3 | PC resin (MW: 18500) | | | | | | | | | | | | | |
| | | A-4 | PC resin (MW: 20000) | | | | | | | | | | | | | |
| | Component B | B-1 | Tri(o-tolyl)phosphine | 0.05 | 0.01 | 0.03 | 0.05 | 0.07 | 0.10 | | 0.05 | 0.05 | 0.05 | 0.05 | 0.05 | 0.05 |
| | | B-2 | Tri(2,5-xylyl)phosphine | | | | | | | 0.05 | | | | | | |
| | Component C | C-1 | Revonox 608 | 0.03 | 0.03 | 0.03 | 0.03 | 0.03 | 0.03 | 0.03 | 0.005 | 0.01 | 0.02 | 0.04 | 0.05 | |
| | | C-2 | PEP 36 | | | | | | | | | | | | | 0.005 |
| | Component D | D-1 | MARPROOF G0250SP | 0.03 | 0.03 | 0.03 | 0.03 | 0.03 | 0.03 | 0.03 | 0.03 | 0.03 | 0.03 | 0.03 | 0.03 | 0.03 |
| | Component E | E-1 | RIKEMAL S100A | | 0.05 | 0.05 | 0.05 | 0.05 | 0.05 | 0.05 | 0.05 | 0.05 | 0.05 | 0.05 | 0.05 | 0.05 |
| | | E-2 | Unistar H-476 | | | | | | | | | | | | | |
| Evaluation Results | Light Guide Performance (lx) | Blue LED | Illuminance after passing through 300-mm-long molded article | 83 | 83 | 84 | 87 | 82 | 83 | 77 | 80 | 81 | 85 | 85 | 84 | 85 |
| | | White LED | Illuminance after passing through 300-mm-long molded article | 761 | 758 | 757 | 765 | 759 | 766 | 760 | 757 | 761 | 761 | 758 | 765 | 762 |
| | Dry Heat Resistance ΔYI | 1000-hr Treatment | YI after treatment - YI before treatment | 0.5 | 0.9 | 0.6 | 0.5 | 0.5 | 0.6 | 0.9 | 0.6 | 0.5 | 0.5 | 0.4 | 0.4 | 0.7 |
| | Damp Heat Resistance ΔHaze | 24-hr Treatment | Haze after treatment - Haze before treatment | 1.3 | 0.5 | 1.4 | 4.4 | 2.3 | 3.3 | 12.9 | 0.0 | 0.0 | 0.0 | 6.7 | 10.6 | 0.0 |

(continued)

| | | | | Examples | | | | | | | | | | | | |
|---|---|---|---|---|---|---|---|---|---|---|---|---|---|---|---|---|
| | | | | C-1 | C-2 | C-3 | C-4 | C-5 | C-6 | C-7 | C-8 | C-9 | C-10 | C-11 | C-12 | C-13 |
| Pass/Fail Judgment | Light Guide Performance (lx) | Blue LED | Pass Criteria ≥ 75 | A | A | A | A | A | A | A | A | A | A | A | A | A |
| | | White LED | Pass Criteria ≥ 750 | A | A | A | A | A | A | A | A | A | A | A | A | A |
| | Dry Heat Resistance ΔYI | 1000-hr Heating | Pass Criteria ≤ 1.0 | A | A | A | A | A | A | A | A | A | A | A | A | A |
| | Damp Heat Resistance ΔHaze | 24-hr Treatment | Pass Criteria ≤ 15 | A | A | A | A | A | A | A | A | A | A | A | A | A |
| | Overall Judgment | | Pass Criteria: All evaluation items passed | A | A | A | A | A | A | A | A | A | A | A | A | A |

[Table 5]

| | | | | Examples | | | | | | | | | | | |
|---|---|---|---|---|---|---|---|---|---|---|---|---|---|---|---|
| | | | | C-14 | C-15 | C-16 | C-17 | C-18 | C-19 | C-20 | C-21 | C-22 | C-23 | C-24 | C-25 |
| Composition (parts by mass) | Component A | A-1 | PC resin (MW: 15000) | 100 | 100 | 100 | 100 | 100 | 100 | 100 | 100 | 100 | | | |
| | | A-2 | PC resin (MW: 17000) | | | | | | | | | | 100 | | |
| | | A-3 | PC resin (MW: 18500) | | | | | | | | | | | 100 | |
| | | A-4 | PC resin (MW: 20000) | | | | | | | | | | | | 100 |
| | Component B | B-1 | Tri(o-tolyl)phosphine | 0.05 | 0.05 | 0.05 | 0.05 | 0.05 | 0.05 | 0.05 | 0.05 | 0.05 | 0.05 | 0.05 | 0.05 |
| | | B-2 | Tri(2,5-xylyl)phosphine | | | | | | | | | | | | |
| | Component C | C-1 | Revonox 608 | | | 0.03 | 0.03 | 0.03 | 0.03 | 0.03 | 0.03 | 0.03 | 0.03 | 0.03 | 0.03 |
| | | C-2 | PEP 36 | 0.01 | 0.02 | | | | | | | | | | |
| | Component D | D-1 | MARPROOF G0250SP | 0.03 | 0.03 | 0.03 | 0.03 | 0.03 | 0.03 | 0.01 | 0.05 | 0.10 | 0.03 | 0.03 | 0.03 |
| | Component E | E-1 | RIKEMAL S100A | 0.05 | 0.05 | 0.03 | 0.10 | | | 0.05 | 0.05 | 0.05 | 0.05 | 0.05 | 0.05 |
| | | E-2 | Unistar H-476 | | | | | 0.05 | 0.10 | | | | | | |
| Evaluation Results | Light Guide Performance (lx) | Blue LED | Illuminance after passing through 300-mm-long molded article | 86 | 88 | 82 | 87 | 87 | 88 | 84 | 86 | 79 | 82 | 76 | 75 |
| | | White LED | Illuminance after passing through 300-mm-long molded article | 758 | 765 | 763 | 766 | 763 | 766 | 763 | 764 | 755 | 758 | 750 | 752 |
| | Dry Heat Resistance ΔYI | 1000-hr Treatment | YI after treatment - YI before treatment | 0.9 | 1.0 | 0.4 | 0.5 | 0.6 | 0.6 | 0.5 | 0.6 | 0.5 | 0.6 | 0.7 | 0.7 |
| | Damp Heat Resistance ΔHaze | 24-hr Treatment | Haze after treatment - Haze before treatment | 0.0 | 0.0 | 4.0 | 12.2 | 4.2 | 8.5 | 7.7 | 3.2 | 1.7 | 0.4 | 0.2 | 0.0 |

(continued)

| | | | | Examples | | | | | | | | | | | |
|---|---|---|---|---|---|---|---|---|---|---|---|---|---|---|---|
| | | | | C-14 | C-15 | C-16 | C-17 | C-18 | C-19 | C-20 | C-21 | C-22 | C-23 | C-24 | C-25 |
| Pass/Fail Judgment | Light Guide Performance (lx) | Blue LED | Pass Criteria ≥ 75 | A | A | A | A | A | A | A | A | A | A | A | A |
| | | White LED | Pass Criteria ≥ 750 | A | A | A | A | A | A | A | A | A | A | A | A |
| | Dry Heat Resistance ΔYI | 1000-hr Heating | Pass Criteria ≤ 1.0 | A | A | A | A | A | A | A | A | A | A | A | A |
| | Damp Heat Resistance ΔHaze | 24-hr Treatment | Pass Criteria ≤ 15 | A | A | A | A | A | A | A | A | A | A | A | A |
| | Overall Judgment | | Pass Criteria: All evaluation items passed | A | A | A | A | A | A | A | A | A | A | A | A |

[Table 6]

| | | | | Comparative Examples | | | | |
|---|---|---|---|---|---|---|---|---|
| | | | | C-1 | C-2 | C-3 | C-4 | C-5 |
| Composition (parts by mass) | Component A | A-1 | PC resin (MW: 15000) | 100 | 100 | 100 | 100 | 100 |
| | Component B | B-1 | Tri(o-tolyl)phosphine | | | | | |
| | Component C | C-1 | Revonox 608 | 0.03 | 0.03 | 0.03 | 0.03 | 0.03 |
| | | C-2 | PEP 36 | | | | | |
| | Component D | D-1 | MARPROOF G0250SP | 0.03 | 0.03 | 0.03 | 0.03 | 0.03 |
| | Component E | E-1 | RIKEMAL S100A | 0.05 | 0.05 | 0.05 | 0.05 | 0.05 |
| | | E-2 | Unistar H-476 | | | | | |
| | Other Components | Z-1 | Triphenylphosphine | 0.05 | | | | |
| | | Z-2 | Tri(m-tolyl)phosphine | | 0.05 | | | |
| | | Z-3 | Tri(p-tolyl)phosphine | | | 0.05 | | |
| | | Z-4 | Tri(3,5-xylyl)phosphine | | | | 0.05 | |
| | | Z-6 | IRGAFOS 168 | | | | | 0.05 |
| Evaluation Results | Light Guide Performance (lx) | Blue LED | Illuminance after passing through 300-mm-long molded article | 54 | 50 | 51 | 41 | 72 |
| | | White LED | Illuminance after passing through 300-mm-long molded article | 762 | 758 | 751 | 751 | 759 |
| | Dry Heat Resistance ΔYI | 1000-hr Treatment | YI after treatment - YI before treatment | 1.2 | 1.6 | 2.0 | 1.8 | 0.7 |
| | Damp Heat Resistance ΔHaze | 24-hr Treatment | HAZE after treatment - Haze before treatment | 7.6 | 6.4 | 0.0 | 1.6 | 4.0 |
| Pass/Fail Judgment | Light Guide Performance (lx) | Blue LED | Pass Criteria ≥ 75 | B | B | B | B | B |
| | | White LED | Pass Criteria ≥ 750 | A | A | A | A | A |
| | Dry Heat Resistance ΔYI | 1000-hr Heating | Pass Criteria ≤ 1.0 | B | B | B | B | A |
| | Damp Heat Resistance ΔHaze | 24-hr Treatment | Pass Criteria ≤ 15 | A | A | A | A | A |
| | Overall Judgment | | Pass Criteria: All evaluation items passed | B | B | B | B | B |

Industrial Applicability

The polycarbonate resin composition of the invention undergoes less discoloration in a high-temperature environment and has excellent thermal stability, and molded articles obtained from the polycarbonate resin composition can be used for various industrial applications in the fields of lighting including LED lighting, office automation equipment, electrical and electronic equipment, automobiles, building materials, and the like. They are extremely useful.

## Claims

**1.** A polycarbonate resin composition comprising, relative to (A) a polycarbonate resin (component A), (B) a triarylphosphine (component B) represented by the following formula [1]:

[Chemical formula 1]

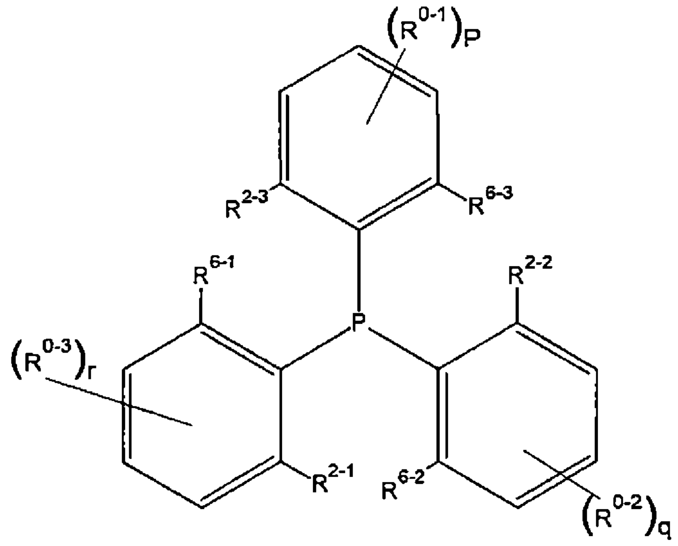

〔1〕

wherein $R^{2-1}$, $R^{2-2}$, $R^{2-3}$, $R^{6-1}$, $R^{6-2}$, $R^{6-3}$, $R^{0-1}$, $R^{0-2}$, and $R^{0-3}$ are each a hydrogen atom, a hydrocarbon group, an alkoxy group, or a halogen and may be the same or different from each other, with the proviso that at least one of $R^{2-1}$, $R^{2-2}$, $R^{2-3}$, $R^{6-1}$, $R^{6-2}$, and $R^{6-3}$ is a hydrocarbon group, an alkoxy group, or a halogen, and p, q, and r are each an integer of 0 to 3.

2. The polycarbonate resin composition according to claim 1, wherein in formula [1], the hydrocarbon group is an alkyl group, an aralkyl group, an alkenyl group, or an aryl group.

3. The polycarbonate resin composition according to claim 1, wherein in formula [1], at least one of $R^{2-1}$, $R^{2-2}$, $R^{2-3}$, $R^{6-1}$, $R^{6-2}$, and $R^{6-3}$ is an alkyl group or an alkoxy group.

4. The polycarbonate resin composition according to claim 1, wherein in formula [1], at least one of $R^{2-1}$, $R^{2-2}$, $R^{2-3}$, $R^{6-1}$, $R^{6-2}$, and $R^{6-3}$ is an alkyl group having 1 to 4 carbon atoms.

5. The polycarbonate resin composition according to claim 1, wherein the triarylphosphine as component B is tri(o-tolyl) phosphine, tri(2,4-xylyl)phosphine, or tri(2,5-xylyl)phosphine.

6. The polycarbonate resin composition according to claim 1, comprising 0.001 to 0.1 parts by mass of the component B per 100 parts by mass of the component A.

7. A molded article formed from the polycarbonate resin composition according to any one of claims 1 to 6.

## INTERNATIONAL SEARCH REPORT

International application No.
**PCT/JP2024/003425**

### A. CLASSIFICATION OF SUBJECT MATTER

***C08L 69/00***(2006.01)i; ***C08K 5/50***(2006.01)i
FI: C08L69/00; C08K5/50

According to International Patent Classification (IPC) or to both national classification and IPC

### B. FIELDS SEARCHED

Minimum documentation searched (classification system followed by classification symbols)

C08L69/00; C08K5/50

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-070874 A (MITSUBISHI CHEMICAL CORPORATION) 10 May 2018 (2018-05-10) claims, examples | 1-7 |
| X | JP 2013-513708 A (BAYER INTELLECTUAL PROPERTY GMBH) 22 April 2013 (2013-04-22) claims, examples | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/003425**

| Patent document cited in search report | Publication date (day/month/year) | Patent family member(s) | Publication date (day/month/year) |
|---|---|---|---|
| JP 2018-070874 A | 10 May 2018 | (Family: none) | |
| JP 2013-513708 A | 22 April 2013 | US 2011/0144250 A1<br>claims, examples<br>WO 2011/082940 A1<br>EP 2513213 A1<br>DE 102009058200 A<br>CN 102791786 A<br>KR 10-2012-0116436 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011080060 A
- JP 2005112963 A